# EUROPEAN PATENT SPECIFICATION

(11) **EP 0 764 896 B1**
(45) Date of publication and mention of the grant of the patent: **22.08.2001**
(21) Application number: 96306872.1
(22) Date of filing: 20.09.1996
(51) Int. Cl.: G05D 7/06

(54) **Volume compensating pressure regulated flow control dispensing system**
Abgabevorrichtung mit System zur druckgeregelten Mengeregelung und Volumenausgleich
Système de distribution ayant un système de commande de flux régulé en pression avec compensation de volume

(30) Priority: 22.09.1995 US 4204
(43) Date of publication of application: 26.03.1997
(73) Proprietor: GRACO INC., Minneapolis, Minnesota 55434 (US)
(72) Inventor: Box, Gary W., Golden Valley, Minnesota 55427 (US)
(74) Representative: Sturt, Clifford Mark

(56) References cited:
- EP-A- 0 529 686
- US-A- 4 556 956
- US-A- 5 301 873
- US-A- 5 327 473

## Description

### Background of the Invention

Pressure regulated flow control dispensing systems have been in use for many years. Such systems though are known to become less accurate when either system components wear or the material itself changes in viscosity or otherwise.

Traditionally, such systems are used on a robot which might apply, for example, a bead of adhesive around a windshield. To the extent that such correction has been carried out in the past, it has been on the basis of one cycle of the robot, for example, one complete bead dispensed around a windshield.

EP 0529686A relates to a method of compensating for changes in the flow characteristic of a fluid being dispensed from a nozzle.

### Summary of Invention

Because conditions can change more rapidly than that, it is therefore an object of this invention to provide a system which provides automatic volume compensation on a real time basis to compensate for such system changes.

It is further an object of this invention to provide a system which may be easily implemented and which utilises hardware which is already in place in the basic system.

According to an aspect of the present invention, there is provided a method for compensating for changes in a system for dispensing high viscosity fluids wherein said system comprises an input command, a gain block having a loop gain and a flow meter measuring actual system output and providing a signal corresponding to the volume dispensed, said method characterised by comprising:
comparing said input command and said volume signal when a predetermined amount of fluid has passed through said flow meter;
increasing said gain block by a fixed predetermined amount when the difference between said input command and said volume signal is greater than zero, said fixed predetermined amount not being proportional to said difference; and
decreasing said gain block by a fixed predetermined amount when the difference between said input command and said volume signal is less than zero.

The invention consists of adding a fluid flowmeter such as a gear meter and a gain block which multiplies the set point of the controller by a factor K. The gain block and other data handling functions are implemented as software on the attendant controller.

The compensation sequence starts by setting two counters with fixed values. The first counter is decremented at each pulse from the flowmeter while a second counter is also decremented at periodic intervals by an amount proportional to the set point command from other equipment (such as a robot controller).

When the first counter reaches zero, indicating that the preset fixed amount has been dispensed, the contents of the second counter are compared to zero. If the contents of the second counter is greater than zero, the gain is increased by a small fixed amount. If the contents of the second counter are less than zero, the gain is decreased by the same small fixed amount. Both counters are rest and the process repeated.

The gain factor K starts off at a value of 1 and is allowed to fluctuate between minimum and maximum values (for example .5 to 1.5). The sample volume is set sufficiently small to force several adjustments over the course of a total dispense cycle (such as the aforementioned windshield). No operator input is required for operation of this compensator.

Also by way of example in the preferred embodiment, each counter is initially loaded with 64 counts. The gain Kis incremented or decremented in .01 increments and if the limits of .5 or 1.5 are reached, a warning may be provided to the operator which would suggest that the operator check general operation of the device and consider recalibration.

These and other objects and advantages of the invention will appear more fully from the following description made in conjunction with the accompanying drawings wherein like reference characters refer to the same or similar parts throughout the several views.

### A BRIEF DESCRIPTION OF THE DRAWINGS

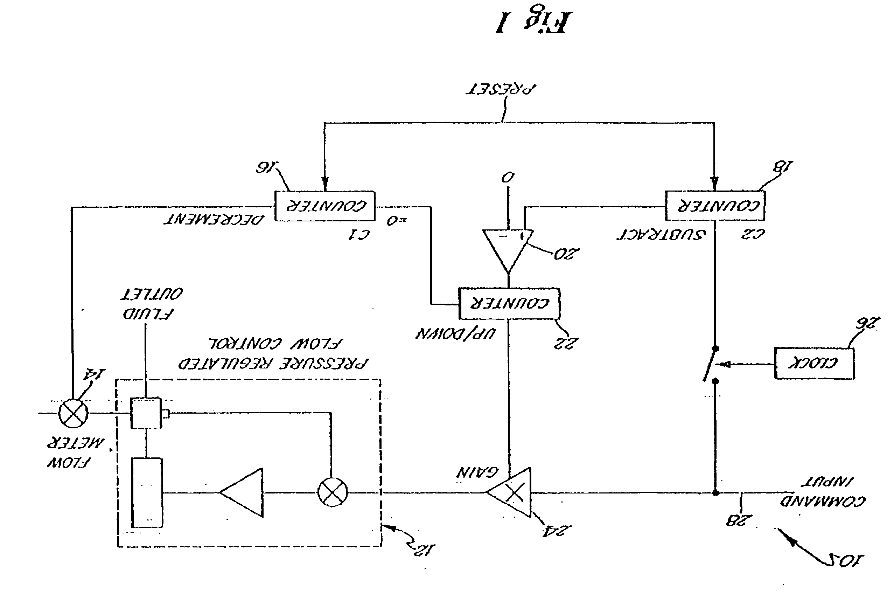

Fig. 1 is a block diagram showing the instant invention.

### DESCRIPTION OF THE PREFERRED EMBODIMENT

The instant invention, generally designated 10, is designed for use with a typical pressure regulated flow device such as that shown in the dotted outline in block 12. The fluid outlet of that device is provided with a flowmeter 14 which in turn sends pulse signals to first counter 16. For example, the flowmeter might provide an output pulse for each 1914 cc of fluid dispensed and which pulse decrements first counter 16.

First counter 16 is set at the same time as second counter 18, which is decremented with an input from command input 28 via clock 26. At the point when first counter 16 reaches zero, comparitor 20 looks at the contents of counter 18. If the contents of counter 18 are greater than zero, the gain in block 24 is increased by a small fixed amount (in the preferred embodiment .01) while if the second counter is less than zero, the gain is decreased by the same amount.

The gain in block 24 is allowed a maximum value in the preferred embodiment of 1.5 and a minimum value of .5 at which point no further change takes place and an alarm or warning may be made to alert the operator that attention needs to be given the system.

The aforegoing description has been given by way of example only and it will be appreciated by a person skilled in the art that modifications can be made without departing from the scope of the present invention.

## Claims

1. A method for compensating for changes in a system (10) for dispensing high viscosity fluids wherein said system comprises an input command (28), a gain block (24) having a loop gain and a flow meter (14) measuring actual system output and providing a signal corresponding to the volume dispensed, said method characterised by comprising:
comparing said input command and said volume signal when a predetermined amount of fluid has passed through said flow meter;
increasing said gain block by a fixed predetermined amount when the difference between said input command and said volume signal is greater than zero, said fixed predetermined amount not being proportional to said difference; and
decreasing said gain block by a fixed predetermined amount when the difference between said input command and said volume signal is less than zero.

2. A method as claimed in claim 1, wherein said flow meter provides an output pulse for each unit of volume dispensed, said method further comprising:
providing first and second counters (16, 18) and loading each of said counters with a count corresponding to a predetermined volume;
decrementing said first counter (16) with each pulse from said flowmeter;
calculating a flow from said input command;
wherein said step of comparing said input command and said volume signal comprises decrementing said second counter (18) periodically by an amount corresponding to said flow calculated from said input command, and comparing said counters when said first counter reaches zero; and
wherein said steps of increasing and decreasing said gain block comprise increasing said gain block by a fixed predetermined amount when the contents of said second counter are greater than zero, and decreasing said gain block by a fixed predetermined amount when said second counter contents are less than zero.

3. A method as claimed in claim 1 or claim 2, wherein said loop gain has a maximum and a minimum value.

4. A method as claimed in claim 3, wherein attainment of one of said maximum and minimum values produces a warning.

## Patentansprüche

1. Verfahren zum Kompensieren von Änderungen in einem System (10) zur Abgabe hochviskoser Fluide, wobei das System umfasst: einen Eingabebefehl (28), einen Verstärkungsblock (24) mit einer Schleifenverstärkung und einen Durchflussmesser (14), der die tatsächliche Systemausgabe misst und ein dem abgegebenen Volumen entsprechendes Signal bereitstellt, wobei das Verfahren dadurch gekennzeichnet ist, dass es umfasst:
Vergleichen des Eingabebefehls und des Volumensignals, wenn eine vorbestimmte Fluidmenge durch den Durchflussmesser geströmt ist;
Erhöhen des Verstärkungsblocks um einen festen vorbestimmten Betrag, wenn die Differenz zwischen dem Eingabebefehl und dem Volumensignal größer als Null ist, wobei der feste vorbestimmte Betrag zu der Differenz nicht proportional ist; und
Verringern des Verstärkungsblocks um einen festen vorbestimmten Betrag, wenn die Differenz zwischen dem Eingabebefehl und dem Volumensignal kleiner als Null ist.

2. Verfahren nach Anspruch 1, wobei der Durchflussmesser einen Ausgabepuls für jede abgegebene Volumeneinheit bereitstellt, wobei das Verfahren ferner umfasst:
Bereitstellen erster und zweiter Zähler (16, 18) und Laden jedes der Zähler mit einem Zählerstand, der einem vorbestimmten Wert entspricht;
Dekrementieren des ersten Zählers (16) mit jedem Puls von dem Durchflussmesser;
Berechnen eines Durchflusses aus dem Eingabebefehl;
wobei der Schritt, den Eingabebefehl und das Volumensignal zu vergleichen, umfasst: das periodische Dekrementieren des zweiten Zählers (18) um einen Betrag, der dem aus dem Eingabebefehl berechneten Durchfluss entspricht und das Vergleichen der Zähler, wenn der erste Zähler Null erreicht; und
wobei die Schritte, den Verstärkungsblock zu erhöhen und zu verringern, umfassen: das Erhöhen des Verstärkungsblocks um einen festen vorbestimmten Betrag, wenn der Inhalt des zweiten Zählers größer als Null ist und das Verringern des Verstärkungsblocks um einen festen vorbestimmten Betrag, wenn der Inhalt des zweiten Zählers kleiner als Null ist.

3. Verfahren nach Anspruch 1 oder 2, wobei die Schleifenverstärkung einen Maximal- und einen Minimalwert hat.

4. Verfahren nach Anspruch 3, wobei das Erreichen entweder des Maximalwerts oder des Minimalwerts eine Warnung erzeugt.

## Revendications

1. Procédé pour compenser des changements dans un système (10) pour distribuer des fluides à viscosité élevée dans lequel ledit système comprend une commande d'entrée (28), un bloc de gain (24) ayant un gain de boucle et un débitmètre (14) mesurant la sortie effective du système et délivrant un signal correspondant au volume distribué, ledit procédé étant caractérisé par les étapes consistant à :
comparer ladite commande d'entrée et ledit signal de volume lorsqu'une quantité prédéterminée de fluide est passée par ledit débitmètre ;
augmenter ledit bloc de gain d'une quantité prédéterminée fixée lorsque la différence entré ladite commande d'entrée et ledit signal de volume est supérieure à zéro, ladite quantité prédéterminée fixée n'étant pas proportionnelle à ladite différence ; et
diminuer ledit bloc de gain d'une quantité prédéterminée fixée lorsque la différence entre ladite commande d'entrée et ledit signal de volume est inférieure à zéro.

2. Procédé selon la revendication 1, dans lequel ledit débitmètre délivre une impulsion de sortie pour chaque unité de volume distribuée, ledit procédé comprenant en outre les étapes consistant à :
prévoir des premier et second compteurs (16,18) et charger chacun desdits compteurs avec un compte correspondant à un volume prédéterminé ;
décrémenter ledit premier compteur (16) avec chaque impulsion provenant dudit débitmètre ;
calculer un débit depuis ladite commande d'entrée ;
dans lequel ladite étape consistant à comparer ladite commande d'entrée et ledit signal de volume comprend l'opération consistant à décrémenter ledit second compteur (18) périodiquement d'une quantité correspondante audit débit calculé à partir de ladite commande d'entrée et comparer lesdits compteurs lorsque ledit premier compteur atteint zéro ; et
dans lequel lesdites étapes consistant à incrémenter et à décrémenter ledit bloc de gain comprennent l'opération consistant à incrémenter ledit bloc de gain d'une quantité prédéterminée fixée lorsque les contenus dudit second compteur sont supérieurs à zéro et décrémenter ledit bloc de gain d'une quantité prédéterminée fixée lorsque lesdits contenus du second compteur sont inférieurs à zéro.

3. Procédé selon la revendication 1 ou la revendication 2, dans lequel ledit gain de boucle présente une valeur maximale et une valeur minimale.

4. Procédé selon la revendication 3, dans lequel l'atteinte d'une valeur parmi lesdites valeurs maximale et minimale produit un avertissement.
